# EUROPEAN PATENT SPECIFICATION

(11) **EP 4 395 155 B1**
(45) Date of publication and mention of the grant of the patent: **07.10.2026**
(21) Application number: 22885244.8
(22) Date of filing: 29.07.2022
(51) Int. Cl.: H02P 27/08, H02H 7/09, H02P 6/08, H02P 6/28

(54) **METHOD FOR ADAPTIVELY ADJUSTING PWM DUTY CYCLE, CIRCUIT AND MOTOR DRIVING SYSTEM**
VERFAHREN ZUM ADAPTIVEN ANPASSEN EINES PWM-TASTVERHÄLTNISSES, EINER SCHALTUNG UND EINES MOTORANSTEUERUNGSSYSTEMS
PROCÉDÉ POUR AJUSTER DE MANIÈRE ADAPTATIVE UN CYCLE DE SERVICE PWM, UN CIRCUIT ET UN SYSTÈME COMMANDE DE MOTEUR

(30) Priority: 01.11.2021 CN 202111282951
(43) Date of publication of application: 03.07.2024
(73) Proprietor: CRM ICBG (WUXI) CO., LTD., Wuxi, Jiangsu 214135 (CN)
(72) Inventor: WANG, Sang, Wuxi, Jiangsu 214135 (CN); ZHAO, Xudong, Wuxi, Jiangsu 214135 (CN); ZHANG, Zhengrui, Wuxi, Jiangsu 214135 (CN)
(74) Representative: Canzler & Bergmeier Patentanwälte Partnerschaft mbB
(86) International application number: PCT/CN2022/108942
(87) International publication number: WO 2023/071344

(56) References cited:
- WO-A1-2021/174737
- CN-A- 103 904 897
- CN-A- 106 602 970
- CN-A- 113 193 792
- JP-A- 2005 094 925
- US-A1- 2013 154 536
- US-A1- 2014 225 545
- DING DAWEI ET AL: "Suppression of Beat Phenomenon for Electrolytic Capacitorless Motor Drives Accounting for Sampling Delay of DC-Link Voltage", IEEE TRANSACTIONS ON INDUSTRIAL ELECTRONICS, IEEE SERVICE CENTER, PISCATAWAY, NJ, USA, vol. 69, no. 2, 10 March 2021 (2021-03-10), pages 1167 - 1176, XP011885771, ISSN: 0278-0046, [retrieved on 20211028], DOI: 10.1109/TIE.2021.3063984
- DEVOS THOMAS ET AL: "Avoiding DC link oscillations in drives", IECON 2020 THE 46TH ANNUAL CONFERENCE OF THE IEEE INDUSTRIAL ELECTRONICS SOCIETY, IEEE, 18 October 2020 (2020-10-18), pages 876 - 882, XP033860485, DOI: 10.1109/IECON43393.2020.9255094
- ZHU LEI ET AL: "Deep field-weakening control of PMSMs for both motion and generation operation", ELECTRICAL MACHINES AND SYSTEMS (ICEMS), 2011 INTERNATIONAL CONFERENCE ON, IEEE, 20 August 2011 (2011-08-20), pages 1 - 5, XP032020238, ISBN: 978-1-4577-1044-5, DOI: 10.1109/ICEMS.2011.6073476

## Description

### FIELD OF THE INVENTION

The present application relates to the field of motor driving, and in particular, to a method, circuit, and motor driving system for adaptively adjusting a Pulse Width Modulation (PWM) duty cycle.

### BACKGROUND OF THE INVENTION

The use of permanent magnet synchronous motors (PMSMs) is widespread in household appliances and power tools. However, abrupt voltage fluctuations in the electrical grid can result in significant variations in the direct current (DC) bus voltage when the hardware circuit lacks sufficient capacitance, impacting the motor's overall performance. Related solutions tackle the issue of bus voltage fluctuations through both software and hardware strategies. Software strategies often involve complex damping control techniques, necessitating additional power loops and posing challenges during debugging. These software strategies also incur substantial computational overhead. In contrast, hardware strategies frequently rely on voltage boost mechanisms to mitigate bus voltage fluctuations, but they require additional peripheral circuits, and improper control may lead to over-voltage (that is, the bus voltage must not exceed the ideal bus voltage), further escalating circuit costs.

As a result, finding ways to manage bus voltage fluctuations while addressing cost and implementation challenges remains a critical concern for professionals in this field.

Ding Dawei et al discloses suppression of beat phenomenon for electrolytic capacitorless motor drives accounting for sampling delay of dc-link voltage. In the study, the characteristics of stator current harmonics caused by the voltage sampling delay are analyzed. Further, the beat phenomenon generated from the interaction between the harmonics and the fundamental current is investigated, and the envelope feature of the stator current is derived mathematically. For the purpose of suppressing the beat phenomenon, a voltage reconstruction strategy is proposed to reduce the influence of dc-link voltage sampling delay at the six times of grid frequency. By utilizing the reconstructed dc-link voltage for calculation of PWM duty ratio, the beat phenomenon can be attenuated significantly. The proposed method can be integrated into motor control system easily. Experimental results show the effectiveness of the proposed strategy in a prototype of electrolytic capacitorless permanent magnet synchronous motor drive.

Devos Thomas et al discloses avoiding DC link oscillations in drives. Variable speed drives often contain a DC link with a passive filter to decrease the Total Harmonic Distortion of the input currents. Unfortunately, the interaction of the motor with this filter may yield an undesirable sustained oscillation in the DC link. Devos Thomas et al propose a simple yet effective strategy to avoid this phenomenon, by suitably manipulating the inverter duty cycles. The stability analysis, based on the mathematical theory of averaging, is interesting in itself as a means to study oscillations in power systems.

US 2013/0154536 A1 discloses an apparatus for controlling an inverter. The apparatus detecting a DC link voltage of the inverter and a load amount using an output current outputted from a motor to the inverter, and deducting a load amount detected at the time of occurrence of instantaneous power failure from a command frequency at the time of the occurrence of instantaneous power failure, whereby a command voltage and a command frequency driving the motor can be outputted.

### SUMMARY OF THE INVENTIO

In view of the above-mentioned disadvantages of the related technology, the present application aims to provide a method for adaptively adjusting a Pulse Width Modulation (PWM) duty cycle, a circuit, and a motor driving system for solving the problems of high cost, difficulty in implementation, etc.

The method for adaptively adjusting the PWM duty cycle, for the motor driving system, comprises:
1) sampling a direct current bus voltage to obtain sample signals of the direct current bus voltage, and performing a low-pass filtering on the sample signals to obtain low-pass filtered signals;
2) determining whether the direct current bus voltage is under-voltage based on the low-pass filtered signals; if yes, entering an under-voltage protection state; and if not, executing step 3);
3) calculating a new duty cycle D' and a new amplitude corresponding to the new duty cycle D', wherein the new duty cycle D' satisfies: D'=D x A/B, wherein D denotes a duty cycle obtained from a control loop of the motor driving system, A denotes a previous sample signal of the direct current bus voltage, and B denotes a current sample signal of the direct current bus voltage; and
4) determining whether the new duty cycle D' is greater than 100%; if yes, applying a weak magnetic control; and if not, setting an amplitude of a carrier for generating PWM signals as the new amplitude, so as to adjust a duty cycle of the PWM signals through the new amplitude;
during the weak magnetic control, the amplitude of the carrier is first set to a maximum value, and then phases of the PWM signals are changed by adjusting a phase of the carrier.

Optionally, power devices are turned off when the direct current bus voltage is under-voltage.

Optionally, the control loop comprises a current loop, torque loop, or speed loop.

Optionally, the carrier comprises a sine wave, saddle wave, or square wave.

To achieve the above and other related purposes, the present application provides a circuit for adaptively adjusting the PWM duty cycle, for the motor driving system, comprising:
a sampling module, configured to receive a direct current bus voltage and sample the direct current bus voltage, so as to obtain sample signals of the direct current bus voltage;
a digital filtering module, connected to an output end of the sampling module, and configured to perform a low-pass filtering on the sample signals to obtain low-pass filtered signals;
an under-voltage determination module, connected to an output end of the digital filtering module, and configured to determine whether the direct current bus voltage is under-voltage based on the low-pass filtered signals;
a duty cycle calculation module, connected to the output end of the sampling module and an output end of the under-voltage determination module, and configured to calculate a new duty cycle D' and a new amplitude corresponding to the new duty cycle D' when the direct current bus voltage is not under-voltage; wherein the new duty cycle D' satisfies: D'=D x A/B; wherein D denotes a duty cycle obtained from a control loop of the motor driving system, A denotes a previous sample signal of the direct current bus voltage, and B denotes a current sample signal of the direct current bus voltage;
a duty cycle determination module, connected to an output end of the duty cycle calculation module, and configured to determine whether the new duty cycle D' is greater than 100%; and
an adjustment module, connected to the output end of the duty cycle calculation module and an output end of the duty cycle determination module, and configured to initiate a weak magnetic control when the new duty cycle D' is greater than 100%, and apply the new amplitude to a sine wave generator when the new duty cycle D' is less than or equal to 100%, so as to adjust a duty cycle of PWM signals through the new amplitude.

Optionally, the sampling module comprises analog-to-digital converters.

Optionally, the duty cycle calculation module comprises a divider circuit and a multiplier circuit; wherein the divider circuit divides the previous sample signal of the direct current bus voltage by the current sample signal of the direct current bus voltage to obtain a ratio, and the multiplier circuit multiplies the ratio with the duty cycle fed back by the control loop of the motor driving system to obtain the new duty cycle.

Optionally, the circuit further comprises an under-voltage protection module connected to the output end of the under-voltage determination module.

To achieve the above and other related purposes, the present application provides a motor driving system, comprising:
a rectifier, an inverter, a motor, and a controller; wherein
the rectifier receives a power grid voltage and rectifies the power grid voltage into a direct current bus voltage;
the inverter is connected to an output end of the rectifier, and configured to convert the direct current bus voltage into a motor driving signal through the controller;
the motor is connected to an output end of the inverter, and configured to rotate based on the motor driving signal;
the controller obtains a motor sampling signal and the direct current bus voltage, and generates PWM signals for controlling the inverter;
wherein the controller comprises a control loop signal processing unit, a sine wave generator, a PWM generator, and the circuit for adaptively adjusting the PWM duty cycle mentioned above;
the control loop signal processing unit generates a control loop output signal based on the motor sampling signal;
the circuit generates an adjustment signal based on fluctuations of the direct current bus voltage;
the sine wave generator is connected to an output end of the control loop signal processing unit and an output end of the circuit, and configured to generate a carrier based on the control loop output signal, and adjust an amplitude or phase of the carrier by controlling the circuit;
the PWM generator is connected to an output end of the sine wave generator, and configured to generate PWM signals based on the carrier.

Optionally, the sine wave generator generates a sine wave, saddle wave, or square wave.

Optionally, the motor sampling signal comprises a current sampling signal, torque sampling signal, or speed sampling signal.

As describe above, the method, circuit, and motor driving system of the present application have the following beneficial effects.

Without altering the core current loop, torque loop, or speed loop of the motor driving system, this application adaptively adjusts the PWM duty cycle based on existing sine wave generators and PWM generators. This approach effectively mitigates the impact of direct current bus voltage fluctuations on motor performance. Importantly, it achieves these benefits without extra requirement on CPU performance, ensuring straightforward operation, and significantly reducing costs.

### BRIEF DESCRIPTION OF DRAWINGS

FIG. 1 shows a schematic structural diagram of a circuit for adaptively adjusting a PWM duty cycle according to the present application.
FIG. 2 shows a schematic structural diagram of a duty cycle calculation module according to the present application.
FIG. 3 shows a schematic structural diagram of a motor driving system according to the present application.
FIG. 4 shows a flowchart of a method for adaptively adjusting the PWM duty cycle according to the present application.

### Reference Numerals

- 1: Controller
- 1a: Circuit for adaptively adjusting a PWM duty cycle
- 11: Sampling module
- 12: Digital filtering module
- 13: Under-voltage determination module
- 14: Duty cycle calculation module
- 14a: Divider circuit
- 14b: Multiplier circuit
- 15: Duty cycle determination module
- 16: Adjustment module
- 1b: Control loop signal processing unit
- 1c: Sine wave generator
- 1d: PWM generator
- 1e: Sensor interface
- 2: Rectifier
- 3: Inverter
- 4: Motor
- 5: Sensor

### DETAILED DESCRIPTION OF THE INVENTION

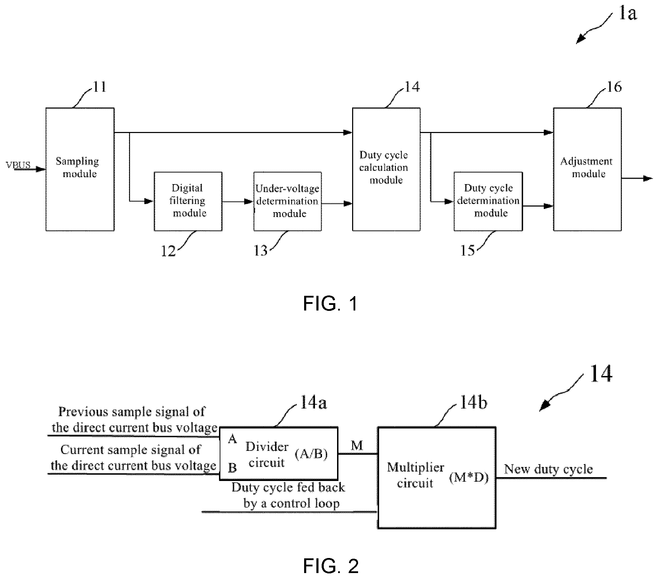

Referring to FIGs. 1 to 4. It should be noted that the drawings provided in this application only illustrate the basic concept of the present application in a schematic way, so the drawings only show the components closely related to the present application. The drawings are not necessarily drawn according to the number, shape, and size of the components in actual implementation; during the actual implementation, the type, quantity, and proportion of each component can be changed as needed, and the components' layout may also be more complicated.

### Embodiment 1

As shown in FIG. 1, Embodiment 1 provides a circuit 1a for adaptively adjusting a PWM duty cycle, which is used for a motor driving system, comprising:
a sampling module 11, a digital filtering module 12, an under-voltage determination module 13, a duty cycle calculation module 14, a duty cycle determination module 15 and an adjustment module 16.

As shown in FIG. 1, the sampling module 11 receives a direct current bus voltage VBUS and samples the direct current bus voltage VBUS, so as to obtain sample signals of the direct current bus voltage VBUS.

Specifically, when a load changes greatly, the power grid voltage fluctuates, and the input direct current bus voltage VBUS also fluctuates. In Embodiment 1, the sampling module 11 is implemented by an analog-to-digital converter, and corresponding digital signals are generated through an analog-to-digital conversion to obtain fluctuation information of the power grid voltage. The circuit structure of the analog-to-digital converter may be adjusted as needed, which is not limited herein.

As shown in FIG. 1, the digital filtering module 12 is connected to an output end of the sampling module 11, and is configured to perform a low-pass filtering on the sample signals to obtain low-pass filtered signals.

Specifically, by low-pass filtering the sample signals through the digital filtering module 12, an average value of the sample signals within a set time is obtained.

As shown in FIG. 1, the under-voltage determination module 13 is connected to an output end of the digital filtering module 12, and is configured to determine whether the direct current bus voltage VBUS is under-voltage based on the low-pass filtered signals.

Specifically, in Embodiment 1, the under-voltage determination module 13 is implemented by a comparison module, comparing an output voltage of the digital filtering module 12 with a voltage of an under-voltage protection point. When the output voltage of the digital filtering module 12 is less than the voltage of the under-voltage protection point, the under-voltage determination module 13 determines that the direct current bus voltage VBUS is under-voltage. When the output voltage of the digital filtering module 12 is greater than or equal to the voltage of the under-voltage protection point, the under-voltage determination module 13 determines that the direct current bus voltage VBUS is not under-voltage.

As shown in FIG. 1, the duty cycle calculation module 14 is connected to the output end of the sampling module 11 and an output end of the under-voltage determination module 13, and is configured to calculate a new duty cycle D' and a new amplitude corresponding to the new duty cycle D' when the direct current bus voltage VBUS is not under-voltage.

Specifically, as shown in FIG. 2, in Embodiment 1, the duty cycle calculation module 14 comprises a divider circuit 14a and a multiplier circuit 14b. The divider circuit 14a obtains the sample signals from the sampling module 11, and divides a previous sample signal A of the direct current bus voltage VBUS by a current sample signal B of the direct current bus voltage VBUS to obtain a ratio M, where M=A/B. The multiplier circuit 14b obtains a duty cycle D from a control loop of the motor driving system, and multiplies the ratio M with the duty cycle D fed back by the control loop of the motor driving system to obtain the new duty cycle D', where D'=M*D. In application, any circuit structure capable of obtaining a relational expression satisfying D'=D x A/B is applicable to the present application. As an example, the multiplier circuit may be used to multiply the duty cycle D by the previous sample signal A, and then divide by the current sample signal B, which is not limited to Embodiment 1.

It should be noted that the new amplitude corresponds to the new duty cycle D' in a proportional way. As an example, when the new duty cycle D' is 100%, the new amplitude is 1V, and when the new duty cycle is 0%, the new amplitude is 0V. The proportional relationship between the new amplitude and the new duty cycle D' may be adjusted as needed, which is not limited to Embodiment 1.

It should be noted that the control loop of the motor driving system may comprise a current loop, speed loop, and torque loop.

As shown in FIG. 1, the duty cycle determination module 15 is connected to an output end of the duty cycle calculation module 14, and is configured to determine whether the new duty cycle D' is greater than 100%.

Specifically, in Embodiment 1, the duty cycle determination module 15 is implemented by a comparison module, and the duty cycle determination module 15 compares the new duty cycle D' with 100%, and obtains a comparison result.

As shown in FIG. 1, the adjustment module 16 is connected to the output end of the duty cycle calculation module 14 and an output end of the duty cycle determination module 15, and is configured to initiate a weak magnetic control when the new duty cycle D' is greater than 100%, and apply the new amplitude to a sine wave generator when the new duty cycle D' is less than or equal to 100%, so as to adjust a duty cycle of PWM signals through the new amplitude.

Specifically, in Embodiment 1, when the new duty cycle D' is greater than 100%, the adjustment module 16 first outputs an adjustment signal to adjust an amplitude of a carrier to a maximum value (that is, the corresponding duty cycle is 100%, and when the new duty cycle D' is 100%, the step of adjusting the amplitude may be omitted), and to adjust a phase of the carrier to change phases of the PWM signals, thereby changing a lead angle of the motor. As an example, the phases of the PWM signals are adjusted forward to achieve the weak magnetic control.

Specifically, when the new duty cycle D' is less than or equal to 100%, the adjustment module 16 applies the new amplitude output by the duty cycle calculation module 14 to the sine wave generator, so as to adjust the duty cycle of the PWM signals through the new amplitude, and the phases of the PWM signals remain unchanged.

In another example, the circuit 1a further comprises an under-voltage protection module (not shown). The under-voltage protection module is connected to the output end of the under-voltage determination module 13, and turns off power devices when the direct current bus voltage is under-voltage, implementing under-voltage protection. As an example, a gate of each power device may be pulled down by turning on a pull-down path to turn off each power device.

### Embodiment 2

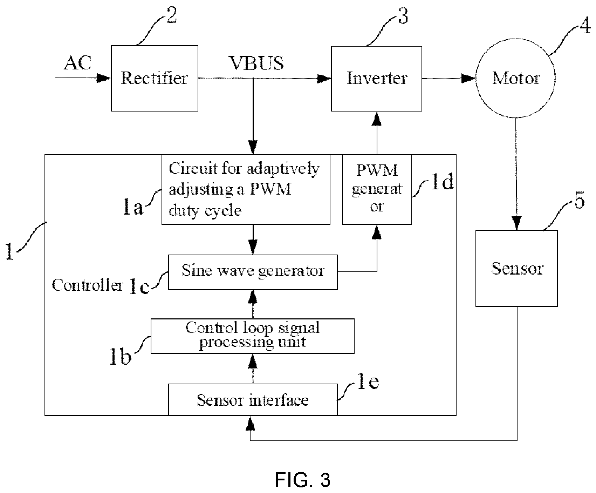

As shown in FIG. 3, Embodiment 2 provides a motor driving system, comprising:
a controller 1, a rectifier 2, an inverter 3, and a motor 4.

As shown in FIG. 3, the rectifier 2 receives a power grid voltage AC and rectifies the power grid voltage AC into a direct current bus voltage.

Specifically, the rectifier 2 may be a rectifier bridge structure, and any circuit structure capable of converting an alternating current voltage into a direct current voltage is applicable to the present application.

It should be noted that the rectifier 2 further comprises a power conversion unit for power conversion. The power conversion unit may comprise a boost circuit and a buck circuit, and any circuit structure capable of implementing power conversion and obtaining desired voltage signals is applicable to the present application.

As shown in FIG. 3, the inverter 3 is connected to an output end of the rectifier 2, and is configured to convert the direct current bus voltage VBUS into a motor driving signal through the controller 1.

Specifically, any circuit structure capable of converting the direct current bus voltage VBUS into an alternating current voltage to drive the motor 4 is applicable to the present application.

As shown in FIG. 3, the motor 4 is connected to an output end of the inverter 3, and is configured to rotate based on the motor driving signal.

Specifically, in Embodiment 2, the motor 4 is a three-phase motor. In application, the motor may be set according to actual needs.

As shown in FIG. 3, the controller 1 obtains a motor sampling signal and the direct current bus voltage, and generates PWM signals for controlling the inverter.

As an example, the motor driving system further comprises a sensor 5. The sensor 5 is configured to collect the motor sampling signal, including but not limited to a current sampling signal, speed sampling signal, or torque sampling signal of the motor 4. In practice, some torque can be controlled without feedback from the torque sampling signal when the duty cycle is considered to be the torque.

Specifically, the controller 1 obtains the motor sampling signal from the motor 4, and generates a feedback control signal based on a difference value between the motor sampling signal and a reference signal. The controller 1 comprises the circuit 1a, a control loop signal processing unit 1b, a sine wave generator 1c, and a PWM generator 1d. As an example, the controller 1 further comprises a sensor interface 1e for acquiring an output signal of the sensor 5.

More specifically, as shown in FIG. 3, the control loop signal processing unit 1b generates a control loop output signal based on the motor sampling signal.

More specifically, as shown in FIG. 3, the circuit 1a generates an adjustment signal based on fluctuations of the direct current bus voltage VBUS, so as to adjust an amplitude and/or phase of the sine wave generator 1c.

More specifically, as shown in FIG. 3, the sine wave generator 1c is connected to an output end of the control loop signal processing unit 1b and an output end of the circuit 1a, and is configured to generate a carrier based on the control loop output signal, and adjust an amplitude or phase of the carrier by controlling the circuit 1a. Input signals of the sine wave generator 1c comprise amplitudes and phases, so as to generate a carrier with a corresponding amplitude and phase. The carrier generated by the sine wave generator 1c may be adjusted with parameters to obtain a corresponding sine wave, saddle wave, or square wave. The sine wave generator 1c generates a carrier based on the control loop output signal, and generates the PWM signals based on the carrier, so as to control the inverter 3. In addition, the sine wave generator 1c further adjusts the amplitude and/or phase of the carrier by controlling the circuit 1a, thereby controlling the inverter 3. The adjustment path and the control loop are independent of each other, and therefore the control loop does not need to be changed, ensuring straightforward operation, and significantly reducing costs.

More specifically, as shown in FIG. 3, the PWM generator 1d is connected to an output end of the sine wave generator 1c, and is configured to generate the PWM signals based on the carrier.

Specifically, the amplitude of the carrier determines the duty cycle of the PWM signals output by the PWM generator 1d, and the phase of the carrier determines whether the PWM signals have a lead output or a hysteresis output. The PWM signals are square wave signals whose amplitudes are the same, whose duty cycles are related to the amplitude of the carrier, and whose phases are related to that of the carrier. The PWM signals are used for controlling the power devices in the inverter 3.

It should be noted that, in Embodiment 2, the inverter 3, the motor 4, the sensor 5, the control loop signal processing unit 1b, the sine wave generator 1c, and the PWM generator 1d constitute the control loop. The present application builds upon existing control loops by incorporating additional multiplication and division operations (implemented within the circuit for adaptively adjusting the PWM duty cycle). This enables rapid updates and/or phase adjustments of the PWM duty cycle based on variations in the direct current bus voltage, mitigating the impact of voltage fluctuations on the motor. Importantly, these modifications do not affect previously fine-tuned parameters of any existing speed loop, current loop, or torque loop. Instead, they directly modify the sine wave generator and PWM generator, resulting in a straightforward and cost-effective solution.

### Embodiment 3

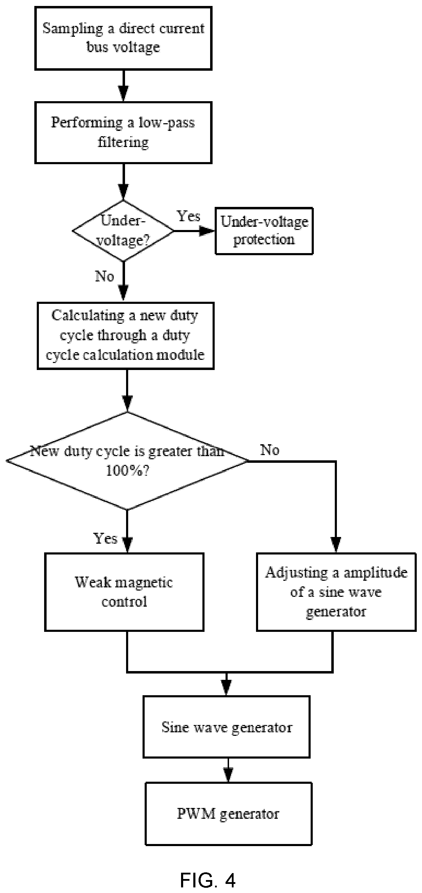

As shown in FIG. 4, Embodiment 3 provides a method for adaptively adjusting a PWM duty cycle, which may be implemented based on the circuit according to Embodiment 1. Any hardware or software capable of implementing this method is applicable to the present application. The method for adaptively adjusting the PWM duty cycle comprises:
1) sampling a direct current bus voltage to obtain sample signals of the direct current bus voltage, and performing a low-pass filtering on the sample signals to obtain low-pass filtered signals.

Specifically, when the power grid voltage fluctuates, the direct current bus voltage also fluctuates, and the fluctuation information of the power grid voltage is obtained by sampling the direct current bus voltage. In Embodiment 3, the sampling of the direct current bus voltage is implemented in an analog-to-digital conversion manner, and in application, any sampling manner capable of sampling the direct current bus voltage is applicable to the present application. Digital low-pass filtering is performed on the sample signals to obtain an average value of the sample signals within a set time.

2) determining whether the direct current bus voltage is under-voltage based on the low-pass filtered signals; if yes, entering an under-voltage protection state; and if not, executing step 3).

Specifically, a low-pass filtered voltage is compared with a voltage of an under-voltage protection point to determine whether the direct current bus voltage is under-voltage. As an example, if the direct current bus voltage is under-voltage, an under-voltage protection is initiated by turning off all power devices (including but not limited to a power switch transistor in the inverter 3). If the direct current bus voltage is not under-voltage, the step 3) is performed.

3) dividing a previous sample signal of the direct current bus voltage by a current sample signal of the direct current bus voltage to obtain a ratio, and multiplying the ratio with a duty cycle fed back by a control loop of the motor driving system to obtain a new duty cycle D' and a new amplitude corresponding to the new duty cycle D'.

Specifically, the new duty cycle D' can be calculated by a relationship D'=D x A/B, where D denotes the duty cycle obtained from the control loop of the motor driving system, A denotes the previous sample signal of the direct current bus voltage, and B denotes the current sample signal of the direct current bus voltage. As an example, the above relationship may be implemented by a multiplier circuit and a divider circuit.

It should be noted that the control loop may comprise a current loop, torque loop, or speed loop, and the duty cycle fed back by the control loop is adjusted as a reference to obtain the new duty cycle.

Specifically, the new amplitude corresponds to the new duty cycle D' in a proportional way. In application, the proportional relationship between the new amplitude and the new duty cycle D' may be adjusted as needed, which is not limited to Embodiment 3.

4) determining whether the new duty cycle D' is greater than 100%; if yes, applying a weak magnetic control; and if not, setting an amplitude of a carrier for generating PWM signals as the new amplitude, so as to adjust a duty cycle of the PWM signals through the new amplitude.

Specifically, the new duty cycle D' is compared with 100% to obtain a comparison result. When the new duty cycle D' is greater than 100%, the weak magnetic control is initiated to output an adjustment signal, so as to adjust the amplitude of the carrier to a maximum value. Then a phase of the carrier is adjusted to change phases of the PWM signals, thereby changing a lead angle of the motor, and achieving weak magnetic control. As an example, the phases of the PWM signals are adjusted forward to achieve the weak magnetic control. When the new duty cycle D' is less than or equal to 100%, the new amplitude is applied to the carrier, so as to adjust the duty cycle of the PWM signals through the new amplitude, and the phases of the PWM signals remain unchanged. As an example, the carrier comprises a sine wave, saddle wave, or square wave.

The present application employs AD modules to monitor external voltage changes. Based on the voltage fluctuations, it categorizes the current direct current bus voltage state. When the voltage variation is minimal, it adjusts the PWM generator's duty cycle by modifying the sine wave generator's amplitude. In cases of significant voltage fluctuations, it fine-tunes both the duty cycle and phase of the PWM generator by adjusting the sine wave generator's amplitude and phase. If the voltage variation becomes excessive, an under-voltage protection is activated. This approach adaptively adjusts the duty cycle of the PWM signals.

In summary, the present application provides a method, circuit, and motor driving system for adaptively adjusting the PWM duty cycle, comprising: 1) sampling a direct current bus voltage to obtain sample signals of the direct current bus voltage, and performing a low-pass filtering on the sample signals to obtain low-pass filtered signals; 2) determining whether the direct current bus voltage is under-voltage based on the low-pass filtered signals; if yes, entering an under-voltage protection state; and if not, executing step 3); 3) calculating a new duty cycle D' and a new amplitude corresponding to the new duty cycle D', wherein the new duty cycle D' satisfies: D'=D x A/B, wherein D denotes a duty cycle obtained from a control loop of the motor driving system, A denotes a previous sample signal of the direct current bus voltage, and B denotes a current sample signal of the direct current bus voltage; 4) determining whether the new duty cycle D' is greater than 100%; if yes, applying a weak magnetic control; and if not, setting an amplitude of a carrier for generating PWM signals as the new amplitude, so as to adjust a duty cycle of the PWM signals through the new amplitude. Without altering the core current loop, torque loop, or speed loop of the motor driving system, this application adaptively adjusts the PWM duty cycle based on existing sine wave generators and PWM generators. This approach effectively mitigates the impact of direct current bus voltage fluctuations on motor performance. Importantly, it achieves these benefits without extra requirement on CPU performance, ensuring straightforward operation, and significantly reducing costs. Therefore, the present disclosure effectively overcomes various shortcomings in the related technology and has high industrial utilization value.

## Claims

1. A method for adaptively adjusting a PWM duty cycle, for a motor driving system, comprising:
1) sampling a direct current bus voltage to obtain sample signals of the direct current bus voltage, and performing a low-pass filtering on the sample signals to obtain low-pass filtered signals;
2) determining whether the direct current bus voltage is under-voltage based on the low-pass filtered signals; if yes, entering an under-voltage protection state; and if not, executing step 3);
3) calculating a new duty cycle D' and a new amplitude corresponding to the new duty cycle D', wherein the new duty cycle D' satisfies: D'=D x A/B, wherein D denotes a duty cycle obtained from a control loop of the motor driving system, A denotes a previous sample signal of the direct current bus voltage, and B denotes a current sample signal of the direct current bus voltage;
4) determining whether the new duty cycle D' is greater than 100%; if yes, applying a weak magnetic control; and if not, setting an amplitude of a carrier for generating PWM signals as the new amplitude, so as to adjust a duty cycle of the PWM signals through the new amplitude;
wherein during the weak magnetic control, the amplitude of the carrier is first set to a maximum value, and then phases of the PWM signals are changed by adjusting a phase of the carrier.

2. The method according to claim 1, wherein power devices are turned off when the direct current bus voltage is under-voltage.

3. The method according to claim 1, wherein the control loop comprises a current loop, torque loop, or speed loop.

4. The method according to claim 1, wherein the carrier comprises a sine wave, saddle wave or square wave.

5. A circuit for adaptively adjusting a PWM duty cycle, for a motor driving system, comprising:
a sampling module (11), configured to receive a direct current bus voltage and sample the direct current bus voltage, so as to obtain sample signals of the direct current bus voltage;
a digital filtering module (12), connected to an output end of the sampling module (11), and configured to perform a low-pass filtering on the sample signals to obtain low-pass filtered signals;
an under-voltage determination module (13), connected to an output end of the digital filtering module (12), and configured to determine whether the direct current bus voltage is under-voltage based on the low-pass filtered signals;
a duty cycle calculation module (14), connected to the output end of the sampling module (11) and an output end of the under-voltage determination module (13), and configured to calculate a new duty cycle D' and a new amplitude corresponding to the new duty cycle D' when the direct current bus voltage is not under-voltage; wherein the new duty cycle D' satisfies: D'=D x A/B; wherein D denotes a duty cycle obtained from a control loop of the motor driving system, A denotes a previous sample signal of the direct current bus voltage, and B denotes a current sample signal of the direct current bus voltage;
a duty cycle determination module (15), connected to an output end of the duty cycle calculation module (14), and configured to determine whether the new duty cycle D' is greater than 100%; and
an adjustment module (16), connected to the output end of the duty cycle calculation module (14) and an output end of the duty cycle determination module (15), and configured to initiate a weak magnetic control when the new duty cycle D' is greater than 100%, and apply the new amplitude to a sine wave generator (1c) when the new duty cycle D' is less than or equal to 100%, so as to adjust a duty cycle of PWM signals through the new amplitude.

6. The circuit according to claim 5, wherein the sampling module (11) comprises analog-to-digital converters.

7. The circuit according to claim 5, wherein the under-voltage determination module (13) comprises comparison modules.

8. The circuit according to claim 5, wherein the duty cycle calculation module (14) comprises a divider circuit (14a) and a multiplier circuit (14b); wherein the divider circuit (14a) divides the previous sample signal of the direct current bus voltage by the current sample signal of the direct current bus voltage to obtain a ratio, and the multiplier circuit (14b) multiplies the ratio with the duty cycle fed back by the control loop of the motor driving system to obtain the new duty cycle.

9. The circuit according to claim 5, wherein the control loop comprises a current loop, torque loop, or speed loop.

10. The circuit according to claim 5, further comprising an under-voltage protection module, wherein the under-voltage protection module is connected to the output end of the under-voltage determination module (13).

11. A motor driving system, comprising:
a rectifier (2), an inverter (3), a motor (4), and a controller (1); wherein
the rectifier (2) receives a power grid voltage and rectifies the power grid voltage into a direct current bus voltage;
the inverter (3) is connected to an output end of the rectifier (2), and configured to convert the direct current bus voltage into a motor driving signal through the controller (1);
the motor (4) is connected to an output end of the inverter (3), and configured to rotate based on the motor driving signal;
the controller (1) obtains a motor sampling signal and the direct current bus voltage, and generates PWM signals for controlling the inverter (3);
wherein the controller (1) comprises a control loop signal processing unit (1b), a sine wave generator (1c), a PWM generator (1d), and the circuit for adaptively adjusting the PWM duty cycle according to claim 6;
the control loop signal processing unit (1b) generates a control loop output signal based on the motor sampling signal;
the circuit generates an adjustment signal based on fluctuations of the direct current bus voltage;
the sine wave generator (1c) is connected to an output end of the control loop signal processing unit (1b) and an output end of the circuit, and configured to generate a carrier based on the control loop output signal, and adjust an amplitude or phase of the carrier by controlling the circuit;
the PWM generator (1d) is connected to an output end of the sine wave generator (1c), and configured to generate PWM signals based on the carrier.

12. The motor driving system according to claim 11, wherein the motor sampling signal comprises a current sampling signal, torque sampling signal, or speed sampling signal.

13. The motor driving system according to claim 11, wherein the motor driving system further comprises a sensor (5).

14. The motor driving system according to claim 13, wherein the controller (1) further comprises a sensor interface (1e) for acquiring an output signal of the sensor (5).

## Patentansprüche

1. Verfahren zum adaptiven Anpassen eines PWM-Tastverhältnisses für ein Motoransteuerungssystem, umfassend:
1) Abtasten einer Gleichstrom-Busspannung, um Abtastsignale der Gleichstrom-Busspannung zu erhalten, und Durchführen eines Tiefpassfilterns an den Abtastsignalen, um tiefpassgefilterte Signale zu erhalten;
2) Bestimmen, ob die Gleichstrom-Busspannung Unterspannung ist, basierend auf den tiefpassgefilterten Signalen; wenn ja, Eintreten in einen Unterspannungsschutzzustand; und wenn nein, Ausführen von Schritt 3);
3) Berechnen eines neuen Tastverhältnisses D' und einer neuen Amplitude, die dem neuen Tastverhältnis D' entspricht, wobei das neue Tastverhältnis D' erfüllt: D' = D x A/B, wobei D ein Tastverhältnis bezeichnet, das von einer Steuerschleife des Motoransteuerungssystems erhalten wird, A ein vorheriges Abtastsignal der Gleichstrom-Busspannung bezeichnet und B ein aktuelles Abtastsignal der Gleichstrom-Busspannung bezeichnet;
4) Bestimmen, ob das neue Tastverhältnis D' größer als 100 % ist; wenn ja, Anwenden einer Schwachmagnetsteuerung; und wenn nein, Setzen einer Amplitude eines Trägers zum Generieren von PWM-Signalen als die neue Amplitude, um ein Tastverhältnis der PWM-Signale durch die neue Amplitude anzupassen;
wobei während der Schwachmagnetsteuerung die Amplitude des Trägers zuerst auf einen Maximalwert gesetzt wird und dann Phasen der PWM-Signale durch Anpassen einer Phase des Trägers geändert werden.

2. Verfahren nach Anspruch 1, wobei Leistungsvorrichtungen ausgeschaltet werden, wenn die Gleichstrom-Busspannung Unterspannung ist.

3. Verfahren nach Anspruch 1, wobei die Steuerschleife eine Stromschleife, Drehmomentschleife oder Drehzahlschleife umfasst.

4. Verfahren nach Anspruch 1, wobei der Träger eine Sinuswelle, Sattelwelle oder Rechteckwelle umfasst.

5. Schaltung zum adaptiven Anpassen eines PWM-Tastverhältnisses für ein Motoransteuerungssystem, umfassend:
ein Abtastmodul (11), das konfiguriert ist, um eine Gleichstrom-Busspannung zu empfangen und die Gleichstrom-Busspannung abzutasten, um Abtastsignale der Gleichstrom-Busspannung zu erhalten;
ein digitales Filtermodul (12), das mit einem Ausgangsende des Abtastmoduls (11) verbunden ist und konfiguriert ist, um ein Tiefpassfiltern an den Abtastsignalen durchzuführen, um tiefpassgefilterte Signale zu erhalten;
ein Unterspannungsbestimmungsmodul (13), das mit einem Ausgangsende des digitalen Filtermoduls (12) verbunden ist und konfiguriert ist, um basierend auf den tiefpassgefilterten Signalen zu bestimmen, ob die Gleichstrom-Busspannung Unterspannung ist;
ein Tastverhältnisberechnungsmodul (14), das mit dem Ausgangsende des Abtastmoduls (11) und einem Ausgangsende des Unterspannungsbestimmungsmoduls (13) verbunden ist und konfiguriert ist, um ein neues Tastverhältnis D' und eine neue Amplitude, die dem neuen Tastverhältnis D' entspricht, zu berechnen, wenn die Gleichstrom-Busspannung nicht Unterspannung ist; wobei das neue Tastverhältnis D' erfüllt: D' = D x A/B; wobei D ein Tastverhältnis bezeichnet, das von einer Steuerschleife des Motoransteuerungssystems erhalten wird, A ein vorheriges Abtastsignal der Gleichstrom-Busspannung bezeichnet und B ein aktuelles Abtastsignal der Gleichstrom-Busspannung bezeichnet;
ein Tastverhältnisbestimmungsmodul (15), das mit einem Ausgangsende des Tastverhältnisberechnungsmoduls (14) verbunden ist und konfiguriert ist, um zu bestimmen, ob das neue Tastverhältnis D' größer als 100 % ist; und
ein Anpassungsmodul (16), das mit dem Ausgangsende des Tastverhältnisberechnungsmoduls (14) und einem Ausgangsende des Tastverhältnisbestimmungsmoduls (15) verbunden ist und konfiguriert ist, um eine Schwachmagnetsteuerung einzuleiten, wenn das neue Tastverhältnis D' größer als 100 % ist, und die neue Amplitude an einen Sinuswellengenerator (1c) anzuwenden, wenn das neue Tastverhältnis D' kleiner als oder gleich 100 % ist, um ein Tastverhältnis von PWM-Signalen durch die neue Amplitude anzupassen.

6. Schaltung nach Anspruch 5, wobei das Abtastmodul (11) Analog-DigitalWandler umfasst.

7. Schaltung nach Anspruch 5, wobei das Unterspannungsbestimmungsmodul (13) Vergleichsmodule umfasst.

8. Schaltung nach Anspruch 5, wobei das Tastverhältnisberechnungsmodul (14) eine Teilerschaltung (14a) und eine Multiplizierschaltung (14b) umfasst; wobei die Teilerschaltung (14a) das vorherige Abtastsignal der Gleichstrom-Busspannung durch das aktuelle Abtastsignal der Gleichstrom-Busspannung teilt, um ein Verhältnis zu erhalten, und die Multiplizierschaltung (14b) das Verhältnis mit dem von der Steuerschleife des Motoransteuerungssystems zurückgeführten Tastverhältnis multipliziert, um das neue Tastverhältnis zu erhalten.

9. Schaltung nach Anspruch 5, wobei die Steuerschleife eine Stromschleife, Drehmomentschleife oder Drehzahlschleife umfasst.

10. Schaltung nach Anspruch 5, ferner umfassend ein Unterspannungsschutzmodul, wobei das Unterspannungsschutzmodul mit dem Ausgangsende des Unterspannungsbestimmungsmoduls (13) verbunden ist.

11. Motoransteuerungssystem, umfassend:
einen Gleichrichter (2), einen Inverter (3), einen Motor (4) und eine Steuerung (1); wobei
der Gleichrichter (2) eine Stromnetzspannung empfängt und die Stromnetzspannung in eine Gleichstrom-Busspannung gleichrichtet;
der Inverter (3) mit einem Ausgangsende des Gleichrichters (2) verbunden ist und konfiguriert ist, um die Gleichstrom-Busspannung durch die Steuerung (1) in ein Motoransteuerungssignal umzuwandeln;
der Motor (4) mit einem Ausgangsende des Inverters (3) verbunden ist und konfiguriert ist, um sich basierend auf dem Motoransteuerungssignal zu drehen;
die Steuerung (1) ein Motorabtastsignal und die Gleichstrom-Busspannung erhält und PWM-Signale zum Steuern des Inverters (3) generiert;
wobei die Steuerung (1) eine Steuerschleifen-Signalverarbeitungseinheit (1b), einen Sinuswellengenerator (1c), einen PWM-Generator (1d) und die Schaltung zum adaptiven Anpassen des PWM-Tastverhältnisses nach Anspruch 6 umfasst;
die Steuerschleifen-Signalverarbeitungseinheit (1b) ein Steuerschleifen-Ausgangssignal basierend auf dem Motorabtastsignal generiert;
die Schaltung ein Anpassungssignal basierend auf Schwankungen der Gleichstrom-Busspannung generiert;
der Sinuswellengenerator (1c) mit einem Ausgangsende der Steuerschleifen-Signalverarbeitungseinheit (1b) und einem Ausgangsende der Schaltung verbunden ist und konfiguriert ist, um einen Träger basierend auf dem Steuerschleifen-Ausgangssignal zu generieren und eine Amplitude oder Phase des Trägers durch Steuern der Schaltung anzupassen;
der PWM-Generator (1d) mit einem Ausgangsende des Sinuswellengenerators (1c) verbunden ist und konfiguriert ist, um PWM-Signale basierend auf dem Träger zu generieren.

12. Motoransteuerungssystem nach Anspruch 11, wobei das Motorabtastsignal ein Stromabtastsignal, Drehmomentabtastsignal oder Drehzahlabtastsignal umfasst.

13. Motoransteuerungssystem nach Anspruch 11, wobei das Motoransteuerungssystem ferner einen Sensor (5) umfasst.

14. Motoransteuerungssystem nach Anspruch 13, wobei die Steuerung (1) ferner eine Sensorschnittstelle (1e) zum Erfassen eines Ausgangssignals des Sensors (5) umfasst.

## Revendications

1. Procédé pour ajuster de manière adaptative un rapport cyclique PWM, pour un système de commande de moteur, comprenant les étapes consistant à :
1) échantillonner un voltage de bus de courant continu pour obtenir des signaux d'échantillonnage du voltage de bus de courant continu, et exécuter un filtrage passe-bas sur les signaux d'échantillonnage pour obtenir des signaux filtrés passe-bas ;
2) déterminer si le voltage de bus de courant continu est un voltage de sous-tension sur la base des signaux filtrés passe-bas ; si oui, entrer dans un état de protection de voltage de sous-tension ; et si non, exécuter l'étape 3) ;
3) calculer un nouveau rapport cyclique D' et une nouvelle amplitude correspondant au nouveau rapport cyclique D', dans lequel le nouveau rapport cyclique D' satisfait : D' = D x A/B, dans lequel D désigne un rapport cyclique obtenu à partir d'une boucle de contrôle du système de commande de moteur, A désigne un signal d'échantillonnage précédent du voltage de bus de courant continu, et B désigne un signal d'échantillonnage de courant du voltage de bus de courant continu ;
4) déterminer si le nouveau rapport cyclique D' est supérieur à 100 % ; si oui, appliquer un contrôle magnétique faible ; et si non, régler une amplitude d'une porteuse pour générer des signaux PWM en tant que nouvelle amplitude, de manière à ajuster un rapport cyclique des signaux PWM par le biais de la nouvelle amplitude ;
dans lequel pendant le contrôle magnétique faible, l'amplitude de la porteuse est d'abord réglée à une valeur maximale, et ensuite les phases des signaux PWM sont changées en ajustant une phase de la porteuse.

2. Procédé selon la revendication 1, dans lequel les dispositifs de puissance sont éteints lorsque le voltage de bus de courant continu est un voltage de sous-tension.

3. Procédé selon la revendication 1, dans lequel la boucle de contrôle comprend une boucle de courant, une boucle de couple ou une boucle de vitesse.

4. Procédé selon la revendication 1, dans lequel la porteuse comprend une onde sinusoïdale, une onde de selle ou une onde carrée.

5. Circuit pour ajuster de manière adaptative un rapport cyclique PWM, pour un système de commande de moteur, comprenant :
un module d'échantillonnage (11), configuré pour recevoir un voltage de bus de courant continu et échantillonner le voltage de bus de courant continu, de manière à obtenir des signaux d'échantillonnage du voltage de bus de courant continu ;
un module de filtrage numérique (12), connecté à une extrémité de sortie du module d'échantillonnage (11), et configuré pour exécuter un filtrage passe-bas sur les signaux d'échantillonnage pour obtenir des signaux filtrés passe-bas ;
un module de détermination de voltage de sous-tension (13), connecté à une extrémité de sortie du module de filtrage numérique (12), et configuré pour déterminer si le voltage de bus de courant continu est un voltage de sous-tension sur la base des signaux filtrés passe-bas ;
un module de calcul de rapport cyclique (14), connecté à l'extrémité de sortie du module d'échantillonnage (11) et à une extrémité de sortie du module de détermination de voltage de sous-tension (13), et configuré pour calculer un nouveau rapport cyclique D' et une nouvelle amplitude correspondant au nouveau rapport cyclique D' lorsque le voltage de bus de courant continu n'est pas un voltage de sous-tension ; dans lequel le nouveau rapport cyclique D' satisfait : D' = D x A/B ; dans lequel D désigne un rapport cyclique obtenu à partir d'une boucle de contrôle du système de commande de moteur, A désigne un signal d'échantillonnage précédent du voltage de bus de courant continu, et B désigne un signal d'échantillonnage de courant du voltage de bus de courant continu ;
un module de détermination de rapport cyclique (15), connecté à une extrémité de sortie du module de calcul de rapport cyclique (14), et configuré pour déterminer si le nouveau rapport cyclique D' est supérieur à 100 % ; et
un module d'ajustement (16), connecté à l'extrémité de sortie du module de calcul de rapport cyclique (14) et à une extrémité de sortie du module de détermination de rapport cyclique (15), et configuré pour initier un contrôle magnétique faible lorsque le nouveau rapport cyclique D' est supérieur à 100 %, et appliquer la nouvelle amplitude à un générateur d'onde sinusoïdale (1c) lorsque le nouveau rapport cyclique D' est inférieur ou égal à 100 %, de manière à ajuster un rapport cyclique de signaux PWM par le biais de la nouvelle amplitude.

6. Circuit selon la revendication 5, dans lequel le module d'échantillonnage (11) comprend des convertisseurs analogique-numérique.

7. Circuit selon la revendication 5, dans lequel le module de détermination de voltage de sous-tension (13) comprend des modules de comparaison.

8. Circuit selon la revendication 5, dans lequel le module de calcul de rapport cyclique (14) comprend un circuit diviseur (14a) et un circuit multiplicateur (14b) ; dans lequel le circuit diviseur (14a) divise le signal d'échantillonnage précédent du voltage de bus de courant continu par le signal d'échantillonnage de courant du voltage de bus de courant continu pour obtenir un rapport, et le circuit multiplicateur (14b) multiplie le rapport par le rapport cyclique renvoyé par la boucle de contrôle du système de commande de moteur pour obtenir le nouveau rapport cyclique.

9. Circuit selon la revendication 5, dans lequel la boucle de contrôle comprend une boucle de courant, une boucle de couple ou une boucle de vitesse.

10. Circuit selon la revendication 5, comprenant en outre un module de protection de voltage de sous-tension, dans lequel le module de protection de voltage de sous-tension est connecté à l'extrémité de sortie du module de détermination de voltage de sous-tension (13).

11. Système de commande de moteur, comprenant :
un redresseur (2), un onduleur (3), un moteur (4) et un contrôleur (1) ; dans lequel
le redresseur (2) reçoit un voltage de réseau électrique et redresse le voltage de réseau électrique en un voltage de bus de courant continu ;
l'onduleur (3) est connecté à une extrémité de sortie du redresseur (2), et configuré pour convertir le voltage de bus de courant continu en un signal de commande de moteur par l'intermédiaire du contrôleur (1) ;
le moteur (4) est connecté à une extrémité de sortie de l'onduleur (3), et configuré pour tourner sur la base du signal de commande de moteur ;
le contrôleur (1) obtient un signal d'échantillonnage de moteur et le voltage de bus de courant continu, et génère des signaux PWM pour contrôler l'onduleur (3) ;
dans lequel le contrôleur (1) comprend une unité de traitement de signal de boucle de contrôle (1b), un générateur d'onde sinusoïdale (1c), un générateur PWM (1d) et le circuit pour ajuster de manière adaptative le rapport cyclique PWM selon la revendication 6 ;
l'unité de traitement de signal de boucle de contrôle (1b) génère un signal de sortie de boucle de contrôle sur la base du signal d'échantillonnage de moteur ;
le circuit génère un signal d'ajustement sur la base de fluctuations du voltage de bus de courant continu ;
le générateur d'onde sinusoïdale (1c) est connecté à une extrémité de sortie de l'unité de traitement de signal de boucle de contrôle (1b) et à une extrémité de sortie du circuit, et configuré pour générer une porteuse sur la base du signal de sortie de boucle de contrôle, et ajuster une amplitude ou une phase de la porteuse en contrôlant le circuit ;
le générateur PWM (1d) est connecté à une extrémité de sortie du générateur d'onde sinusoïdale (1c), et configuré pour générer des signaux PWM sur la base de la porteuse.

12. Système de commande de moteur selon la revendication 11, dans lequel le signal d'échantillonnage de moteur comprend un signal d'échantillonnage de courant, un signal d'échantillonnage de couple ou un signal d'échantillonnage de vitesse.

13. Système de commande de moteur selon la revendication 11, dans lequel le système de commande de moteur comprend en outre un capteur (5).

14. Système de commande de moteur selon la revendication 13, dans lequel le contrôleur (1) comprend en outre une interface de capteur (1e) pour acquérir un signal de sortie du capteur (5).
